Europäisches Patentamt

European Patent Office

Office européen des brevets

(19)

(11) Veröffentlichungsnummer: **0 218 867**
**B1**

(12) **EUROPÄISCHE PATENTSCHRIFT**

(45) Veröffentlichungstag der Patentschrift: **14.11.90**

(21) Anmeldenummer: **86111913.9**

(22) Anmeldetag: **28.08.86**

(51) Int. Cl.⁵: **H 02 H 7/00, H 01 F 7/22**

(54) Magnetspule.

(30) Priorität: **11.09.85 DE 3532396**

(43) Veröffentlichungstag der Anmeldung:
**22.04.87 Patentblatt 87/17**

(45) Bekanntmachung des Hinweises auf die
Patenterteilung:
**14.11.90 Patentblatt 90/46**

(84) Benannte Vertragsstaaten:
**CH DE FR GB LI NL**

(56) Entgegenhaltungen:
DE-A-2 301 152
GB-A-1 230 579
GB-A-1 463 292
US-A-3 703 664

REPORTS ON PROGRESS IN PHYSICS, Band
XXX, part II, 1967, Seiten 600-606, The Institute
of Physics and the Physical Society, London,
GB; P.F. CHESTER: "Superconducting magnets"

JOURNAL OF APPLIED PHYSICS, Band 36, Nr.
10, October 1965, Seiten 3250-3255; B. TAQUET:
"Superconducting coil degradation"

(73) Patentinhaber: **Bruker Analytische Messtechnik
GmbH
Silberstreifen
D-7512 Rheinstetten-Forchheim (DE)**

(72) Erfinder: **Westphal, Michael, Dr.
Trifelsstrasse 22
D-6745 Offenbach (DE)**
Erfinder: **Müller, Wolfgang Hans-Georg, Dr.
Kösliner Strasse 48a
D-7500 Karlsruhe 1 (DE)**

(74) Vertreter: **Patentanwälte Kohler - Schwindling -
Späth
Hohentwielstrasse 41
D-7000 Stuttgart 1 (DE)**

(56) Entgegenhaltungen:
ICEC7 - PROCEEDINGS OF THE SEVENTH
INTERNATIONAL CRYOGENIC ENGINEERING
CONFERENCE, London, GB, 4.-7. 1978, Seiten
156-172, IPC Business Press; M.O. HOENIG:
"Design and development of the US-tespe
toroidal coil"

Courier Press, Leamington Spa, England.

## Beschreibung

Die Erfindung betrifft eine Magnetspule mit mindestens einer ersten Wicklung aus bei Betriebstemperatur supraleitendem Draht und mindestens einer zweiten Wicklung aus normalleitendem Draht, wobei die erste Wicklung und die zweite Wicklung elektrisch parallel geschaltet sind, so daß in die bei vollständig supraleitendem Betrieb der Magnetspule stromlose zweite Wicklung ein Strom dann eingespeist wird, wenn der supraleitende Draht mindestens abschnittweise in den normalleitenden Zustand übergeht, wobei die Magnetspule eine Mehrzahl von miteinander verschalteten ersten Wicklungsabschnitten aus supraleitendem Draht aufweist und erste Wicklungsabschnitte zu zweiten Wicklungsabschnitten aus normalleitendem Draht elektrisch parallel geschaltet sind.

Eine derartige Magnetspule ist aus der GB—A—1 463 292 bekannt. Bei der bekannten Spule sind ein Supraleiter und ein Normalleiter gemeinsam zur Spule gewickelt, und zwischen den beiden Wicklungen besteht eine Mehrzahl von Verbindungen, so daß jeweils ein Abschnitt des Supraleiters mit einem Abschnitt des Normalleiters parallel geschaltet ist.

Eine Magnetspule mit mindestens einer ersten Wicklung aus supraleitendem Draht und mindestens einer zweiten Wicklung aus normal leitendem Draht, die parallel geschaltet sind, ist außerdem aus der US-Z Cryogenics; 1976, S. 705—708 bekannt.

Es ist bekannt, zur Erzeugung von Magnetfeldern mit hoher Feldstärke Magnetspulen zu verwenden, die aus supraleitendem Draht gewickelt sind und im Betrieb auf eine Temperatur abgesenkt werden, bei der in dem Draht Supraleitung auftritt. Diese Spulen befinden sich daher in einem Cryostaten, der durch Kühlung mit flüssigem Helium im Bereich der Magnetspule auf eine Temperatur von wenigen K gehalten wird. In die Magnetspule wird zunächst mit Hilfe eines externen Netzgerätes ein verhältnismäßig hoher Strom eingespeist und die Spule wird dann, wenn durch "Hochfahren" des Stromes die Sollfeldstärke erreicht wurde, mit Hilfe eines sog. Supraleitungsschalters supraleitend kurz geschlossen.

In größeren supraleitenden Magnetspulen sind dabei häufig Energien im MJ-Bereich gespeichert. Unter größeren supraleitenden Magnetspulen sollen hier solche mit einem Innendurchmesser von beispielsweise mehr als 30 cm verstanden werden.

Aufgrund der sehr hohen magnetischen Feldstärke ergibt sich jedoch nicht nur ein sehr hoher Energiegehalt in der Magnetspule, es treten außerdem erhebliche mechanische Zugspannungen in dem die Wicklung bildenden Draht infolge von Lorentzkräften auf. Man muß daher bei der Auslegung und Konstruktion derartiger Magnetspulen darauf achten, daß die austretenden Zugspannungen nicht zu mechanischen Überbeanspruchungen der Magnetwicklung führen.

Infolge derartiger Überbeanspruchungen kann es zu einem sog. "Quench" kommen, d.h. einem irreversiblen Übergang vom supraleitenden in den normalleitenden Zustand. Bei Auftreten eines Quench wird zumindest ein Abschnitt des die Wicklung bildenden Drahtes normalleitend und weist einen ohm'schen Widerstand auf, der vom Nennstrom der Spule durchflossen wird, so daß in kürzester Zeit der gesamte Energieinhalt der Magnetspule in Wärmeenergie umgesetzt wird.

Es muß daher verhindert werden, daß eine normalleitende Zone bei einem Quench für längere Zeit nur auf einen Teilbereich der Magnetwicklung beschränkt bleibt, weil ansonsten infolge der geschilderten Energieumsetzung dort eine unzulässige Erwärmung und damit Zerstörung der Spule erfolgen würde. Außerdem entstehen durch den sehr hohen Nennstrom, der den ohm'schen Widerstand des normalleitenden Drahtabschnittes mit temperaturbedingt reduzierter elektrischer Leitfähigkeit durchfließt, elektrische Überspannungen, die zu Durchschlägen mit Beschädigungen der elektrischen Isolation führen.

Bei bekannten Magnetspulen werden die in dem Wicklungsdraht auftretenden mechanischen Zugspannungen, die der Beziehung

$$\sigma = jBr$$

(mit $\sigma$: mittlere Zugspannung im Drahtquerschnitt; $j$: mittlere Stromdichte im Drahtquerschnitt; $B$: axiale Komponente der magnetischen Induktion in einer Windung; $r$: Radius einer Windung) gehorchen, durch eine reduzierte elektrische Stromdichte $j$ begrenzt. Außerdem wird üblicherweise ein supraleitender Draht verwendet, bei dem der Querschnittsanteil des supraleitenden Materiales, das sich in Form von Multifilamenten in einem normalleitenden Trägermaterial, üblicherweise Kupfer, befindet, weniger als 20 Prozent beträgt. Hierdurch ergibt sich zwar eine entsprechend geringe kritische Stromtragfähigkeit, jedoch aufgrund des relativ hohen Querschnittsanteiles des normalleitenden Trägermateriales eine sehr hohe elektrische und thermische Leitfähigkeit bei tiefen Temperaturen.

Das normalleitende Metall bildet dabei einerseits eine mechanische Verstärkung. Außerdem wird bei einem zunächst teilweisen Quench einer Magnetwicklung der Temperaturanstieg in diesem Bereich wegen der relativ geringen Wärmeleistung verzögert. Darüber hinaus ergibt sich eine gewisse Verbesserung bei der Ausbreitung der normalleitenden Zone durch die gute thermische Leitfähigkeit des normalleitenden Metalles. Dieses hat schließlich noch die Wirkung einer dynamischen Stabilisierung gegen Flußsprünge sowie eine gewisse cryostatische Stabilisierung bei Magnetwicklungen, die für flüssiges Helium durchlässig sind.

Man ist dabei stets bestrebt, bei einem lokal auftretenden Quench die dort auftretende Wärme ausreichend schnell zu verteilen, so daß ein möglichst großer Teil, möglichst die gesamte Magnetspule, in den normalleitenden Zustand übergeht und somit die gespeicherte Energie in einem möglichst großen Raumbereich in Wärmeenergie umgewandelt wird, um lokale Überhitzungen und Überspannungen und damit Beschädigungen oder Zerstörungen zu verhindern. Dabei sind die entstehenden Drahtkosten ein wichtiger wirtschaftlicher Faktor.

Aus der bereits eingangs genannten US-Z Cryogenics; 1976, S. 705—708 ist eine Schutzschaltung für eine supraleitende Spule bekannte, bei der eine Sekundärwicklung benutzt wird. Die Sekundärwicklung besteht aus Kupferdraht, ist bifilar mit der aus supraleitendem Draht bestehenden Primärwicklung gewickelt und die beiden Wicklungen sind an Ihren Enden miteinander verbunden. Tritt nun an einer Stelle innerhalb der supraleitenden Wicklung ein Übergang zur Normalleitung auf, so wird Strom aus der im supraleitenden Betrieb der Magnetspule allein stromführenden supraleitenden Wicklung in die Wicklung aus Kupferdraht umgekoppelt. Dies bedeutet, daß sich die Sekundärwicklung aus Kupferdraht über ihre gesamte Länge gleichmäßig erwärmt und hierdurch soll bewirkt werden, daß auch die supraleitende Spule über ihre ganze Länge in den normalleitenden Zustand gelangt, um die beim "Quenchen" freiwerdende Wärmeenergie auf ein möglichst großes Volumen zu verteilen.

Diese, auf den ersten Blick als Vorteil erscheinende Eigenschaft der bekannten Spule erweist sich jedoch bei näherem Hinsehen als Nachteil, weil das Aufheizen der aus Kupferdraht bestehenden Sekundärspule über ihre gesamte Länge es mit sich bringt, daß eine nach den hier interessierenden Maßstäben lange Zeitspanne vergeht, bis die Aufwärmwirkung die aus supraleitendem Draht gewickelte Primärspule erfaßt. Dies kann unter Umständen dazu führen, daß in der Zwischenzeit an der Stelle des lokalen Übergangs vom normalleitenden in den supraleitenden Zustand bereits soviel Wärme freigeworden ist, daß der supraleitende Draht an dieser Stelle durchgeschmolzen oder geschädigt ist.

Aus der DE—OS 17 64 369 ist weiterhin eine Schutzschaltung für eine supraleitende Magnetspule bekannt, bei der die aus supraleitendem Draht gewickelte Spule an mehreren Positionen angezapft ist und die hierdurch entstehenden, in Reihe liegenden Spulenabschnitte jeweils mit ohm'schen Widerständen überbrückt sind, die ebenfalls miteinander in Reihe geschaltet sind. Die ohm'schen Widerstände sind außerhalb der Magnetspule als diskrete Bauelemente angeordnet.

Hierdurch soll bei der bekannten Schutzschaltung erreicht werden, daß bei einem lokalen Übergang vom supraleitenden in den normalleitenden Zustand innerhalb eines Abschnittes der supraleitenden Spule der Strom dort in den parallel geschalteten ohm'schen Widerstand umgekoppelt wird, so daß über dem gesamten betreffenden Abschnitt der supraleitenden Spule eine Spannung abfällt. Da die einzelnen, in Serie miteinander liegenden Abschnitte der supraleitenden Spule eng miteinander verkoppelt sind, wird durch die vorliegenden Gegeninduktivitäten auf diese Weise ein zusätzlicher Strom in alle übrigen Abschnitte der supraleitenden Spule induziert. Unter der Voraussetzung, daß die Magnetspule dicht unterhalb derjenigen kritischen Stromstärke betrieben wird, bis zu der ein supraleitender Betrieb möglich ist, kann der zuvor geschilderte Mechanismus bewirken, daß aufgrund des zusätzlichen induzierten Stromes die Stromschwelle gerade überschritten wird und die gesamte Spule in den supraleitendem Betrieb übergeht.

Ein Nachteil dieser bekannten Schutzschaltung ist demnach, daß die Spule so dicht wie möglich unterhalb der kritischen Stromstärke betrieben werden muß, was man jeoch meist aus Sicherheitsgründen nicht anstrebt. Außerdem muß die Anzahl der Spulenabschnitte möglichst klein gewählt werden, damit die Länge der Abschnitte bzw. deren Windungszahl so groß wie möglich ist, um den geschilderten Induktionsvorgang überhaupt in realisierbaren Größenordnungen zu halten. Schließlich muß auch der Wert des ohm'schen Widerstandes möglichst hoch gewählt werden, damit der Spannungsabfall an den Spulenabschnitten möglichst groß ist. Dies führt aber wiederum zu erheblichen Zeitkonstanten und damit zu den bereits weiter oben beschriebenen Nachteilen.

In der EP—OS 115 797 ist als weitere Maßnahme zur Beschleunigung der Quenchausbreitung vorgeschlagen worden, in die Magnetwicklung Heizwicklungen einzubauen, die bei Beginn eines Quenches entweder durch eine externe Stromquelle oder durch die an einem passiven Detektornetzwerk bei einem Quench abfallenden Spannungen gespeist werden, jedoch nur dann, wenn ein Quench noch nicht über die vollständige Magnetwicklung ausgebreitet ist.

Eine in der US-Z Rev. Sci. Instruments, 34 (1963) S. 368 ff, vorgeschlagene Einrichtung zur Verbesserung des Spulenschutzes im Quenchfall, sieht vor, die Magnetwicklung in Teilwicklungen zu unterteilen und diese Teilwicklungen mit Ohmschen Widerständen zu überbrücken, in die bei nicht vollständig ausgebreitetem Quench ein Teil des in den betroffenen Teilwicklungen fließenden Stromes eingekoppelt wird. Nachteilig ist bei diesem Verfahren, daß in den Shuntwiderständen oftmals sehr große elektrische Leistungen umgesetzt werden, die zur Zerstörung der Widerstände führen können. Ferner wird eine Beschleunigung der Quenchausbreitung durch diese Maßnahme nur in geringem Maße bewirkt.

Im Lehrbruch von M. N. Wilson, Superconducting Magnets, Oxford 1983, S. 228 und 229 wird vorgeschlagen, die ohmschen Widerstände mit der Magnetwicklung in gut wärmeleitenden Kontakt zu bringen, und so als Heizer zu verwenden, die die Ausbreitung des Quench beschleunigen. Nachteilig ist hier jedoch, daß in diesen Widerständen grundsätzlich auch beim Laden und Entladen des Magneten Wärme erzeugt wird, die einen Quench auslösen kann. Die Quenchausbreitung kann danach weiterhin durch elektrische Heizer beschleunigt werden, die bei Nachweis des Quenchbeginns durch eine Detektorschaltung durch eine externe Stromquelle aufgeheizt werden. Nachteilig ist hier, daß die Zuverlässigkeit des Spulenschutzes durch die aktiven Elemente begrenzt ist.

Eine weitere Einrichtung gemäß US-Z, IEEE Trans. Magn. 13 (1977), S. 77ff sieht vor, die Magnetwicklung in gut wärmeleitenden Kontakt mit einer induktiv gekoppelten Sekundärwicklung aus normalleitendem Werkstoff zu bringen. Diese Sekundärwicklung kann der Spulenkörper sein, Sobald bei einem zunächst teilweise ausgebreiteten Quench das Magnetfeld hinreichend schnell abklingt, werden in der Sekundärwicklung Wirbelströme induziert, die diese aufwärmen, so daß sich infolgedessen die supraleitende Magnetwicklung in größeren Bereichen erwärmt und die Ausbreitung des Quench beschleunigt wird. Hier wird zwar prinzipiell eine Beschleunigung der Quenchausbreitung erreicht. Offensichtlich beginnt eine wirksame Beschleunigung aber erst zu einem Zeitpunkt, an dem sich bereits ein relativ hoher elektrischer Widerstand in der vom Quench betroffenen supraleitenden Wicklung entwickelt hat, der dann ein hinreichend schnelles Abklingen des Magnetfeldes und damit der Induktion von Sekundärströmen bewirkt.

Ein gemeinsamer, wesentlicher Nachteil der bekannten Konfigurationen besteht in der Verwendung des in solchen Fällen üblichen supraleitenden Drahtes mit großem Querschnittsanteil aus normalleitendem Material von beispielsweise über 80 Prozent. Die Herstellung derartiger Drähte ist kompliziert und aufwendig, jedoch in etwa unabhängig vom Querschnittsanteil des normalleitenden Metalles einerseits und des supraleitenden Materiales andererseits. Ein Draht mit vergleichsweise geringerem Querschnittsanteil an normalleitendem Metall von beispielsweise 50 bis 75 Prozent, der eine wesentlich höhere kritische Stromtragfähigkeit infolge des wesentlich höheren Anteiles an supraleitendem Material hätte, wäre daher nur geringfügig teurer, so daß, umgekehrt ausgedrückt, bei den üblicherweise verwendeten Drähten mit großem Querschnittsanteil an normalleitendem Material und damit geringere Stromtragfähigkeit die Drahtkosten, gemessen an der Stromtragfähigkeit, sehr hoch sind. Derartige Drähte mit geringerem Anteil an normalleitendem Metall sind aus "Superconducting Materials Science: Metallurgy, Fabrication and Applications" (Ed.: Foner/Schwartz), Plenum Press, New York 1981, S. 194 bekannt.

Es ist bereits vorgeschlagen worden, die Drahtkosten dadurch zu vermindern, daß man sog. "konfektionierte" Leiter verwendet hat, bei denen eine oder mehrere Adern aus supraleitendem Draht mit geringem Querschnittsanteil aus normalleitendem Metall von beispielsweise 50 bis 75 Prozent bestanden und eine oder mehrere Adern aus normalleitendem Metall damit mechanisch fest verbunden, beispielsweise verseilt, und anschließend verlötet wurden.

Es ist ferner, beispielsweise aus einem Prospekt "3S-LMI" der Firma La Metalli Industriale bekannt geworden, eine Ader von supraleitendem Draht mit relativ geringem Querschnittsanteil an normalleitendem Metall mit einem Band von normalleitendem Metall zu umwickeln und die Stoßstelle der Umwicklung zu verlöten.

Diese bekannten "konfektionierten" Leiter sind jedoch aufgrund der erforderlichen Fertigungsschritte immer noch verhältnismäßig teuer, außerdem ist ihre Isolierung prinzipiell schlechter als die von einstückigen Leitern.

Es sind auch supraleitende Drähte mit quadratischem Querschnitt aus der US—PS 3 177 408 bekannt.

Der Erfindung liegt die Aufgabe zugrunde, eine Magnetspule der eingangs genannten Art dahingehend weiterzubilden, daß ein noch sicherer Betrieb und ein weiter verbesserter Schutz der Spulenwicklung im Falle eines Quench durch schnelle räumliche Ausbreitung der Normalleitung gewährleistet ist, wobei eine Verwendung von supraleitendem Draht mit relativ niedrigem Querschnittsanteil an normalleitendem Metall, d.h. bei geringen Herstellungskosten möglich ist.

Diese Aufgabe wird erfindungsgemäß dadurch gelöst, daß sich die elektrisch parallel geschalteten Wicklungsbschnitte in der Magnetspule im räumlichen Abstand voneinander befinden.

Durch diese Maßnahme ergibt sich der ganz besondere Vorteil, daß die Magnetspule im Falle eines punktuell auftretenden Quenches sofort in zwei unterschiedlichen Raumbereichen aufgeheizt wird, nämlich einmal an der Stelle des supraleitenden Pfades der Parallelschaltung, an dem ein Übergang in den normalleitenden Zustand stattgefunden hat sowie zum anderen im Gesamtbereich des räumlich davon beabstandeten normalleitenden Pfades der zweiten Wicklung. Bei einer lagenweise gewickelten Spule erfolgt somit die Aufheizung gleichzeitig beispielsweise an einem weiter innen liegenden Punkt des ansonsten supraleitenden Pfades und in einer radial weiter außen liegenden Lage, so daß die schnelle räumliche Ausbreitung der Normalleitung in besonderem Maße gefördert wird.

Dieser besondere Vorteil wird vor allem dann erzielt, wenn in weiterer Ausgestaltung dieses Ausführungsbeispieles der Erfindung der im räumlichen Abstand angeordnete Wicklungsabschnitt aus normalleitendem Draht in gut wärmeleitender Verbindung mit mindestens einem weiteren Wicklungsabschnitt aus supraleitendem Draht steht.

In diesem Falle wird die vom eigentlichen Zentrum des Quenches räumlich beabstandete zweite Wicklung aus normalleitendem Draht infolge ihrer sofortigen Aufheizung unmittelbar eine oder mehrere in gut wärmeleitender Verbindung benachbarte supraleitende Wicklungsabschnitte aufheizen und damit in den normalleitenden Zustand überführen, so daß weiterhin die zu diesen benachbarten supraleitenden Wicklungsabschnitten parallelgeschalteten normalleitenden und ihrerseits wiederum räumlich beabstandeten normalleitenden zweiten Wicklungen ebenfalls aufgeheizt werden. Es ergibt sich somit eine Kettenreaktion über das gesamte Volumen der Magnetspule, die zu einem praktisch instantanen Übergang des Wicklungsvolumens vom supraleitenden in den normalleitenden Zustand führt. Die Umsetzung der in der supraleitenden Magnetspule gespeicherten magnetischen Energie in Wärmeenergie wird somit auf das gesamte Spulenvolumen verteilt, so daß lokale Überhitzungen und Überspannungen sicher vermieden werden.

Die mechanischen und elektrischen Wirkungen, die bei bekannten supraleitenden Drähten durch den verhältnismäßig hohen Anteil aus normalleitendem Metall, üblicherweise Kupfer, bewirkt werden, werden erfindungsgemäß von der zweiten Wicklung, die typischerweise von einem Kupferdraht gebildet wird, übernommen, so daß für die erste Wicklung ein supraleitender Draht mit verhältnismäßig niedrigem Querschnittsanteil gewählt werden kann. So kann man beispielsweise statt eines herkömmlichen supraleitenden Drahtes mit einem Verhältnis von 5:1 von normalleitendem zu supraleitendem Metall erfindungsgemäß einen Draht mit einem Verhältnis von 2:1 verwenden, der folglich eine doppelte kritische Stromtragfähigkeit bei vergleichbaren Herstellungskosten aufweist. Es liegt auf der Hand, daß damit erhebliche Kosteneinsparungen möglich sind.

Weiterhin ergibt sich der Vorteil, daß je nach Wicklungsprofil der jeweiligen Magnetspule unterschiedliche lange parallelgeschaltete Wicklungsabschnitte gewählt werden können, so daß Spulenabschnitte, deren Konfiguration sehr kritisch in bezug auf die erzielbare Homogenität der Spule ist, ohne Unterbrechung, d.h. ohne das Herausführen von Leitungen und ohne Verbindungsstellen, ausgeführt werden können, während andere, insbesondere besonders quenchgefährdete Spulenabschnitte, in entsprechend angepaßter Weise ausgebildet sein können.

Bei einer weiteren bevorzugten Ausgestaltung der Erfindung sind die Wicklungen bzw. Wicklungsabschnitte als Lagen ausgebildet.

Diese Maßnahme hat den wesentlichen Vorteil, daß eine als Lage ausgebildete zweite Wicklung ersichtlich einen besonders großen Raumbereich, nämlich einen gesamten Spulenumfang, beeinflußt.

Weiterhin ist eine Ausführungsform der Erfindung bevorzugt, bei der die ersten Wicklungen bzw. Wicklungsabschnitte kraftschlüssig mit den zweiten Wicklungen bzw. Wicklungsabschnitten verbunden sind. Bei der Ausbildung der Wicklungen bzw. Wicklungsabschnitten als Lagen kann dies vor allem dadurch geschehen, daß die Lagen aus supraleitendem Draht mindestens teilweise einen kleineren Windungsradius aufweisen als die Lagen aus normalleitendem Draht.

Diese Maßnahme hat den Vorteil, daß die normalleitenden Lagen als Bandagen wirken, die die Lagen aus supraleitendem Draht rundum umgeben, so daß eine unzulässige Dehnung der Windungen des supraleitenden Drahtes, insbesondere derjenigen mit dem kleinsten Windungsradius, infolge von Zugspannungen, die aus den genannten Lorentzkräften resultieren, sicher vermieden werden. Durch diese Maßnahme wird somit eine aktive Vorsorge getroffen, um das Auftreten eines Quenches überhaupt zu verhindern.

Die vorstehend genannten Wirkungen können vor allem dann erzielt werden, wenn die Lagen aus supraleitendem Draht im Mittel einen kleineren Windungsradius aufweisen als die Lagen aus normalleitendem Draht. Besonders bevorzugt ist es aber auch, wenn die Magnetspule mit zunehmendem Windungsradius abwechselnd Lagen oder Lagenpakete aus supraleitendem Draht und Lagen oder Lagenpakete aus normalleitendem Draht aufweist.

Es ist in diesen Fällen nämlich in besonderem Maße sichergestellt, daß die auftretenden Lorentzkräfte effektiv und gleichmäßig abgefangen werden.

Bei weiteren Ausgestaltungen der Erfindung weist näherungsweise jeder Wicklungsabschnitt aus supraleitendem Draht dieselbe Gegeninduktivität zu der gesamten Wicklung aus supraleitendem Draht auf wie der jeweils parallelgeschaltete Wicklungsabschnitt aus normalleitendem Draht.

Diese Maßnahme hat den Vorteil, daß induzierte Spannungen infolge von Feldänderungen, z.B. beim Er- oder Entregen des Magnetfeldes, keinerlei Stromtransport und folglich Wärmeerzeugung in dem normalleitenden Draht zur Folge haben und damit keine zusätzliche Gefahr für eine vorzeitige Auslösung eines Quenchprozesses durch solche Feldänderungen allein gegeben ist. Der Stromtransport in dem normalleitenden Draht erfolgt vielmehr genau dann, wenn Bereiche des supraleitenden Drahtes einen endlichen ohm-'schen Widerstand entwickeln, also bei einem teilweisen oder vollständigen Übergang in den normalleitenden Zustand. Bei einer Auslegung einer Magnetspule in der geschilderten Art wird also die Er- oder Entregungsgeschwindigkeit der Magnetspule nicht begrenzt.

Es ist weiterhin bevorzugt, wenn in mindestens einer Lage der supraleitende Draht parallel zum normalleitenden Draht verlegt ist.

In vorteilhafter Weise ist erfindungsgemäß der supraleitende Draht ein Multifilament-Draht mit einem Querschnittsanteil eines normalleitenden Trägermateriales von weniger als 80 Prozent, vorzugsweise zwischen 50 und 75 Prozent.

Als normalleitenden Draht wird vorzugsweise ein Kupferdraht im halbharten Zustand mit einem Restwiderstandsverhältnis von mehr als fünfzig verwendet.

Schließlich ergibt sich ein weiterer Vorteil der Erfindung dann, wenn der supraleitende Draht und der normalleitende Draht einen rechteckförmigen Querschnitt aufweisen.

Durch diese Maßnahme läßt sich auf einfache Weise eine besonders gute kraftschlüssige, mechanische Verbindung der ersten Wicklung bzw. Wicklungsabschnitte mit den zweiten Wicklungen bzw. Wicklungsabschnitten realisieren.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1 und 2 Querschnitte, in vergrößertem Maßstab, von supraleitenden Drähten nach dem Stand der Technik;

Fig. 3 einen Längsschnitt, teilweise abgebrochen, durch ein Ausführungsbeispiel einer erfindungsgemäßen Magnetspule;

Fig. 4 ein Verdrahtungsschema für die Magnetspule gemäß Fig. 3;

Fig. 5 ein elektrisches Ersatzschaltbild von zwei erfindungsgemäß parallelgeschalteten Wicklungen bzw. Teilwicklungen.

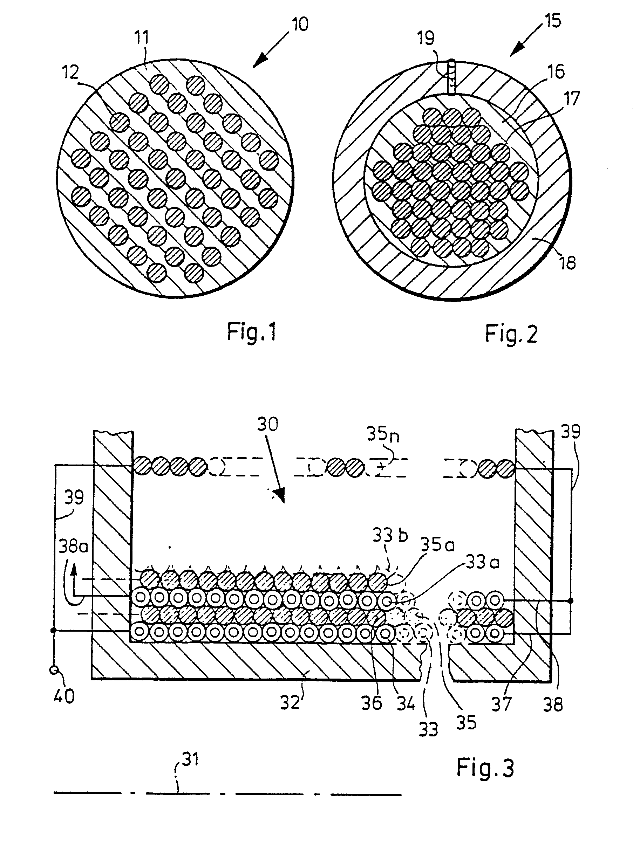

In Fig. 1 bezeichnet 10 gesamthaft einen supraleitenden Multifilament-Draht in Querschnittsdarstellung. In einem Kupfer-Träger 11, allgemein gesprochen einem Trägermaterial aus normalleitendem Metall, befinden sich supraleitende Filamente 12 in räumlicher Verteilung. Eine Kenngröße des supraleitenden Drahtes 10 ist das Verhältnis der jeweiligen Querschnittsflächen von Kupfer-Träger 11 und supraleitenden Filamenten 12. Bei heute für große supraleitende Magnetspulen hoher Homogenität verwendeten Drähten beträgt dieses Verhältnis üblicherweise etwa 7:1.

Fig. 2 zeigt einen weiteren supraleitenden Multifilament-Draht 15, dessen Kupfer-Träger 16 verglichen mit dem Ausführungsbeispiel gemäß Fig. 1 einen kleineren Querschnitt hat, so daß eine gleiche Anzahl von supraleitenden Filamenten 17 dichter im Kupfer-Träger 16 angeordnet ist. Das Verhältnis der Querschnittsanteile liegt somit, bezogen alleine auf den Kupfer-Träger 16 beispielsweise bei 3:2 oder sogar noch darunter. Allerdings ergibt sich für den supraleitenden Draht 15 gemäß Fig. 2 derselbe Außendurchmesser wie für den Draht 10 gemäß Fig. 1, weil um dem Kupfer-Träger 16 ein Kupfer-Mantel 18 in Umfangsrichtung herumgewickelt und an einer axial verlaufenden Lötnaht 19 geschlossen ist. Auf diese Weise hat man bei bekannten Drähten zwar einen etwas dünneren supraleitenden Draht, der kostengünstiger herzustellen ist, verwenden können, mußte jedoch aufgrund des gewünschten relativ hohen Querschnittsanteiles aus normalleitendem Kupfer unter zusätzlichen Kosten den Kupfer-Mantel 18 hinzufügen und bei 19 verlöten. Dieser Leiter kann wegen des Vorhandenseins der Lötnaht 19 außerdem nicht mehr in der kostengünstigen und wegen der geringen Schichtdicke technisch vorteilhaften Lackisolation elektrisch isoliert werden.

Bei der in Fig. 3 als Ausführungsbeispiel gezeigten Magnetspule wird erfindungsgemäß hingegen ein supraleitender Draht mit relativ niedrigem Querschnittsanteil an normalleitendem Material verwendet, ungefähr derart, wie es dem "Kern" 16 in Fig. 2 allein entspricht.

Die in Fig. 3 dargestellte supraleitende Spule 30 ist rotationssymmetrisch um eine Längsachse 31 angeordnet und mit 32 ist ein Spulenkörper schematisch angedeutet. In Kammern des Spulenkörpers 32 sind übereinander Lagen 33, 33a ..., 33n aus supraleitendem Draht 34 und Lagen, 35, 35a ..., 35n aus normalleitendem Draht, nämlich Kupferdraht 36, angeordnet.

Die in Fig. 3 speziell dargestellte Anordnung der im Querschnitt kreisrunden Drähte 34, 36 ist lediglich als Ausführungsbeispiel zu verstehen, es sind selbstverständlich auch andere, an sich bekannte Wickeltechniken einsetzbar, ebenso können Drähte mit von einer Kreisform abweichendem Querschnitt, beispielsweise rechteckigem Querschnitt, verwendet werden.

Mit 37, 38, 38a sind in Fig. 3 Verbindungen der Lagen 33, 33a ..., 33n aus supraleitendem Draht 34 in der üblichen Weise gezeigt.

Man erkennt jedoch, daß durch Verbindungen 39 die erste Lage 33 aus supraleitendem Draht 34 parallel zu einer räumlich beabstandeten Lage 35n aus Kupferdraht 36 geschaltet ist.

Schließlich ist der Beginn der ersten Lage 33 aus supraleitendem Draht 34 mit 40 bezeichnet.

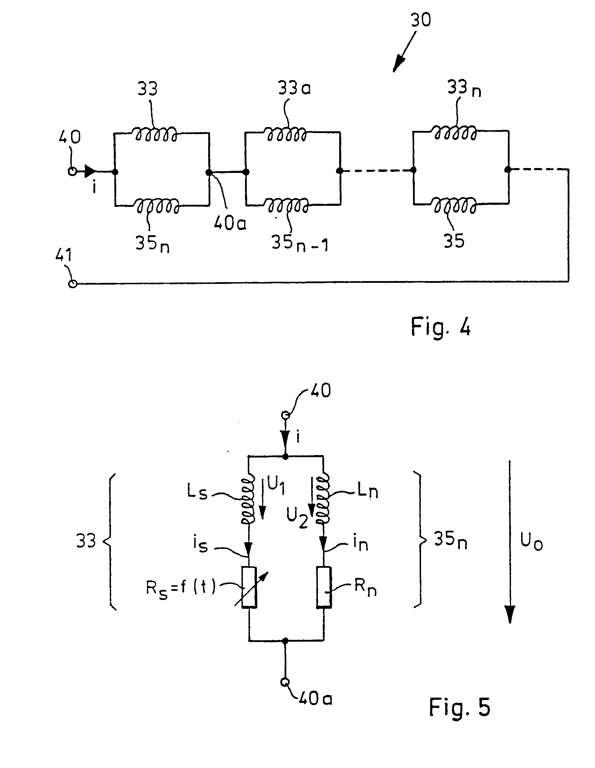

Aus dem Verdrahtungsschema von Fig. 4 erkennt man ergänzend leicht, daß zwischen den Anschlüssen 40, 41 der supraleitenden Spule 30 eine Reihenschaltung von wiederum parallelgeschalteten Wicklungsabschnitten 33/35n; 33a/35n-1 ..., 33n/35 geschaltet sind.

Dies bedeutet, daß im rein supraleitenden Betrieb der Magnetspule 30 der Betriebsstrom i ausschließlich durch die supraleitenden Pfade der Lagen 33, 33a ..., 33n fließt. Erst wenn sich in einer der Lagen 33, 33a ..., 33n ein normalleitender Bereich ausbildet, verzweigt sich der Strom i, wie Fig. 5 zeigt.

In Fig. 5 ist das elektrische Ersatzschaltbild einer der Parallelschaltungen 33/35n dargestellt. Die im Betrieb supraleitende Lage 33 besteht aus der Reihenschaltung einer Induktivität $L_s$ und eines zeitvarianten Widerstandes $R_s$, die von einem "supraleitenden" Strom $i_s$ durchflossen werden. Hierzu parallel liegt die normalleitende Lage 35n, die aus einer Induktivität $L_n$ und einem Widerstand $R_n$ besteht, die von einem "normalleitenden" Strom $i_n$ durchflossen werden.

Wenn die Induktivitäten $L_s$ und $L_n$ mit der vollständig supraleitenden Magnetwicklung induktiv gleich gekoppelt sind, so sind die induktiven Spannungsanteile $U_1$ und $U_2$ an beiden Induktivitäten $L_s$, $L_n$ gleich.

Damit gilt

$$i_s R_s(t) = i_n R_n$$

beziehungsweise

$$i_n = i_s(t) R_s(t) / R_n$$

unabhängig von dem gesamten Spannungsabfall $U_0$, $U_1$ und $U_2$.

Daraus folgt, daß der "normalleitende" Strom $i_n$ dann zu Null wird, wenn der ohm'sche Widerstand der supraleitenden Lage 33 ebenfalls zu Null wird. d.h. im Falle einer vollständig supraleitenden Lage 33. Diese gilt unabhängig von der Lade-oder Entladespannung $U_0$. Die normalleitende Lage 35n übernimmt hingegen genau dann einen Teil des Stromes, wenn die supraleitende Lage 33 teilweise oder vollständig in den normalleitenden Zustand übergeht.

Wenn die Magnetspule 30 gemäß Fig. 3 im vollständig supraleitenden Zustand von Nennstrom i durchflossen wird, entstehen Lorentzkräfte, die die supraleitenden Lage 33, 33a ..., 33n nach außen zu drücken versuchen. Dieser radial nach außen gerichteten Kraft wirken jedoch die Bandagen de normalleitenden Lagen 35, 35a ..., 35n entgegen, die jeweils außerhalb der supraleitenden Lagen 33, 33a ..., 33n angeordnet sind.

Man erkennt aus Fig. 3 beispielhaft auch, daß sich die nebeneinander angeordneten Lagen 33, 33a ..., 33n; 35, 35a ..., 35n in gut wärmeleitender dichter Anordnung befinden. Wird beispielsweise die normalleitende Lage 35 infolge eines Quenches der zu ihr parallelgeschalteten supraleitenden Lage von einem "normalleitenden" Strom $i_n$ durchflossen und damit erwärmt, gibt die normalleitende Lage 35 diese Wärme unmittelbar an die beiden unmittelbar benachbarten supraleitenden Lagen 33 und 33a ab. Durch diese Erwärmung geraten als Sekundärreaktion infolge der guten wärmeleitenden Nachbarschaft die beiden benachbarten supraleitenden Lagen 33, 33a ebenfalls in de normalleitenden Zustand, so daß als Tertiärreaktion die wiederum hierzu parallelgeschalteten normalleitenden Lagen 35n usw. aufgeheizt werden. Diese Kettenreaktion sorgt für eine instantane Aufheizung der Magnetspule 30 und damit für einen großräumigen Übergang in den normalleitenden Zustand.

Es wurde bereits erwähnt, daß zum Wickeln der Magnetspule 30 gemäß Fig. 3 ein supraleitender Draht 34 verwendet werden kann, der dem "Kern" 16 aus Fig. 2 alleine entspricht. Vorzugsweise beträgt bei dem supraleitenden Draht 34 der Querschnittsanteil des normalleitenden Trägers 16 weniger als 80 Prozent, typischerweise liegt er im Bereich zwischen 50 und 75 Prozent. Als normalleitender Draht 36 wird bevorzugt ein Kupferdraht im halbharten Zustand mit einem Restwiderstandsverhältnis von mehr als 50 verwendet.

## Patentansprüche

1. Magnetspule mit mindestens einer ersten Wicklung aus bei Betriebstemperatur supraleitendem Draht (34) und mindestens einer zweiten Wicklung aus normalleitendem Draht (36), wobei die erste Wicklung und die zweite Wicklung elektrisch parallel geschaltet sind, so daß in die bei vollständig supraleitendem Betrieb der Magnetspule (30) stromlose zweite Wicklung ein Strom ($i_n$) dann eingespeist wird, wenn der supraleitende Draht (34) mindestens abschnittweise in den normalleitenden Zustand übergeht, wobei die Magnetspule (30) eine Mehrzahl von miteinander verschalteten ersten Wicklungsabschnitten aus supraleitendem Draht (34) aufweist und erste Wicklungsabschnitte zu zweiten Wicklungsabschnitten aus normalleitendem Draht (36) elektrisch parallel geschaltet sind, dadurch gekennzeichnet, daß sich die elektrisch parallelgeschalteten Wicklungsabschnitte in der Magnetspule (30) im räumlichen Abstand voneinander befinden.

2. Magnetspule nach Anspruch 1, dadurch gekennzeichnet, daß die Wicklungen bzw. Wicklungsabschnitte als Lagen (33, 33a ..., 33n, 35, 35a ..., 35n) ausgebildet sind.

3. Magnetspule nach einem der Ansprüche 1 oder 2, dadurch gekennzeichnet, daß die ersten Wicklungen bzw. Wicklungsabschnitte kraftschlüssig mit den zweiten Wicklungen bzw. Wicklungsabschnitten verbunden sind.

4. Magnetspule nach Anspruch 2 und 3, dadurch gekennzeichnet, daß die Lagen (33, 33a ..., 33n) aus supraleitendem Draht (34) mindestens teilweise einen kleineren Windungsradius aufweisen als die Lagen (35, 35a ..., 35n) aus normalleitendem Draht (36).

5. Magnetspule nach Anspruch 4, dadurch gekennzeichnet, daß die Lagen (33, 33a ..., 33n) aus supraleitendem Draht (34) im Mittel einen kleineren Windungsradius aufweisen als die Lagen (35, 35a ..., 35n) aus normalleitendem Draht (36).

6. Magnetspule nach einem der Ansprüche 2 bis 5, dadurch gekennzeichnet, daß die Magnetspule (30) mit zunehmendem Windungsradius abwechselnd Lagen (33, 33a ..., 33n) oder Lagenpakete aus supraleitendem Draht (34) und Lagen (35, 35a ..., 35n) oder Lagenpakete aus normalleitendem Draht (36) aufweist.

7. Magnetspule nach einem der Ansprüche 1 bis 6, dadurch gekennzeichnet, daß der im räumlichen Abstand angeordnete Wicklungsabschnitt aus normalleitendem Draht (36) in gut wärmeleitender Verbindung mit mindestens einem weiteren Wicklungsabschnitt aus supraleitendem Draht (34) steht.

8. Magnetspule nach einem der Ansprüche 1 bis 7, dadurch gekennzeichnet, daß jeder Wicklungsabschnitt aus supraleitendem Draht (34) näherungsweise dieselbe Gegeninduktivität zu der gesamten Wicklung aus supraleitendem Draht (34) aufweist wie der jeweils parallelgeschaltete Wicklungsabschnitt aus normalleitendem Draht (36).

9. Magnetspule nach einem der Ansprüche 2 bis 8, dadurch gekennzeichnet, daß in mindestens einer Lage (33, 33a ..., 33n, 35, 35a ..., 35n) der supraleitende Draht- (34) parallel zum normalleitenden Draht (36) verlegt ist.

10. Magnetspule nach einem der Ansprüche 1 bis 9, dadurch gekennzeichnet, daß der supraleitende Draht (34) ein Multifilament-Draht (10; 15) mit einem Querschnittsanteil eines normalleitenden Trägers (11; 16) von weniger als 80% ist.

11. Magnetspule nach Anspruch 10, dadurch gekennzeichnet, daß der Querschnittsanteil des normalleitenden Trägers (11; 16) zwischen 50% und 75% liegt.

12. Magnetspule nach einem der Ansprüche 1 bis 11, dadurch gekennzeichnet, daß der normalleitende Draht (36) ein Kupferdraht im halbharten Zustand mit einem Restwiderstandsverhältnis größer als 50 ist.

13. Magnetspule nach einem der Ansprüche 1 bis 12, dadurch gekennzeichnet, daß der supraleitende Draht (34) und der normalleitende Draht (36) einen rechteckförmigen Querschnitt aufweisen.

**Revendications**

1. Bobine d'électro-aimant avec au moins un premier enroulement en un fil (34) qui est supraconducteur à la température de fonctionnement et avec au moins un second enroulement en un fil (36) à conduction normale, le premier enroulement et le second enroulement étant associés en prallèle du point de vue électrique de manière que dans la seconde bobine d'électro-aimant (30) qui est dépourvue de courant lorsque la bobine de l'électro-aimant (30) est complètement supracondrice passe par un courant ($i_n$) lorsque le fil supraconducteur (34) passe, au moins par section, dans son état à conduction normale, la bobine d'électro-aimant (30) comportant une pluralité de premières sections d'enroulement en un fil (34) qui est supraconducteur et qui sont reliées entre elles, et des premières sections d'enroulement étant reliées électriquement en parallèle avec des secondes sections d'enroulement en un fil (36) à conduction normale, caractérisée par le fait que les sections d'enroulement qui sont reliées électriquement en parallèle, se situent, dans la bobine d'électro-aimant (30), à des distances spatiales entre elles.

2. Bobine d'électro-aimant selon la revendication 1, caractérisée par le fait que les enroulements ou les sections d'enroulement sont réalisées sous la forme de couches (33, 33a ..., 33n, 35, 35a ..., 35n).

3. Bobine d'électro-aimant selon l'une des revendications 1 ou 2, caractérisée par le fait que les premiers enroulements ou les premières sections d'enroulement sont reliés avec adhérence ou à transmission de force avec les seconds enroulements ou les secondes sections d'enroulement.

4. Bobine d'électro-aimant selon les revendications 2 et 3, caractérisé par le fait que les couches (33, 33a ..., 33n) constituées par un fil à supraconduction (33), présente, au moins partiellement, un rayon d'enroulement inférieur comparativement à celui des couches (35, 35a ..., 35n) constituées par un fil (36) à conduction normale.

5. Bobine d'électro-aimant selon la revendication 4, caractérisée par le fait que les couches (33, 33a ..., 33n) qui sont faites avec un fil supraconducteur (34) présente, en moyenne, un rayon d'enroulement plus petit, comparativement à celui des couches (35, 35a ..., 35n) formées par un fil (36) à conduction normale.

6. Bobine d'électro-aimant selon l'une des revendications 2 à 5, caractérisée par le fait que la bobine d'électro-aimant (30) comporte des couches alternées (33, 33a ..., 33n) ou paquets de couches alternées, à rayon d'enroulement croissant et réalisés avec un fil supraconducteur (34), et des couches (35, 35a ..., 35n) ou des paquets de couches en un fil (36) à conduction normale.

7. Bobine d'électro-aimant selon l'une des revendications 1 à 6, caractérisée par le fait que la section d'enroulement en un fil (36) à conduction normale et disposée à distance spatiale, est en bonne liaison thermo-conductrice, avec au moins une autre section d'enroulement faite avec un fil (34) à supraconduction.

8. Bobine d'électro-aimant selon l'une des revendications 1 à 7, caractérisée par le fait que chaque section d'enroulement en le fil supraconducteur (34) présente, approximativement, la même inductance mutuelle par rapport à la totalité de l'enroulement en le fil supraconducteur (34), comparativement à la section d'enroulement montée en parallèle et constituée par un fil (36) à conduction normale.

9. Bobine d'électro-aimant selon l'une des revendications 2 à 8, caractérisée par le fait que dans au moins une couche (33, 33a ..., 33n, 35, 35a ..., 35n), le fil (34) à supraconduction est disposé parallèlement au fil (36) à conduction normale.

10. Bobine d'électro-aimant selon l'une des revendications 1 à 9, caractérisée par le fait que le fil à supraconduction (34) est un fil à filament multiple (10; 15) occupant une partie de la section transversale d'un support à conduction normale (11; 16) égale à au moins 80%.

11. Bobine d'électro-aimant selon la revendication 10, caractérisée par le fait que le support (11; 16) à conduction normale occupe une partie de la section transversale se situant entre 50% et 75%.

12. Bobine d'électro-aimant selon l'une des revendications 1 à 11, caractérisée par le fait que le fil (36) à conduction normale, est un fil de cuivre à l'état semi-rigide, ayant un rapport de résistance résiduelle qui est supérieure à 50.

13. Bobine d'électro-aimant selon l'une des revendications 1 à 12, caractérisée par le fait que le fil supraconducteur (34) et le fil à conduction normale (36) présentent une section transversale de forme rectangulaire.

**Claims**

1. Magnet coil with at least one first winding of wire (34) which is superconductive at operating temperature and at least one second winding of normal conductive wire (36), the first winding and the second winding being electrically connected in parallel so that if the superconductive wire (34) goes at least in parts into the normal conductive state, a current ($i_n$) is then fed into the second winding which is without current when the magnet coil (30) is fully operational in superconductive state, the magnet coil (30) having a plurality of first winding segments of superconductive wire (34) connected to each other and first winding segments being electrically connected in parallel to the second winding segments of normal conductive wire (36), characterized in that the electrically parallel connected winding sections are disposed in the magnet coil (30) at a spatial distance from one another.

2. Magnet coil according to claim 1, characterized in that the windings or winding segments are formed as layers (33, 33a ..., 33n, 35, 35a ... 35n).

3. Magnet coil according to one of claims 1 or 2, characterized in that the first windings or winding segments are connected to the seconding windings or winding segments in a force-locking manner.

4. Magnet coil according to claims 2 and 3, characterized in that the layers (33, 33a ..., 33n) of superconductive wire (34) have at least to a certain extent a smaller winding radius than the layers (35, 35a, ..., 35n) of normal conductive wire (36).

5. Magnet coil according to claim 4, characterized in that the layers (33, 33a ..., 33n) of superconductive wire (34) have a smaller winding radius in the centre than the layers (35, 35a ..., 35n) of normal conductive wire (36).

6. Magnet coil according to one of claims 2 to 5, characterized in that the magnet coil (30) has layers (33, 33a ..., 33n) or bundles of layers of superconductive wire (34) and layers (35, 35a ..., 35n) or bundles of layers of normal conductive wire (36) alternating as the winding radius increases.

7. Magnet coil according to one of claims 1 to 6, characterized in that winding segment of normal conductive wire (36) which is disposed at a spatial distance is connected in a thermoconducting manner to at least one further winding segment of superconductive wire (34).

8. Magnet coil according to one of claims 1 to 7, characterized in that each winding segment of superconductive wire (34) has approximately the same mutual inductance to the whole winding of superconductive wire (34) as the respectively parallel connected winding segment of normal conductive wire (36).

9. Magnet coil according to one of claims 2 to 8, characterized in that in at least one layer (33, 33a ..., 33n, 35, 35a ..., 35n) the superconductive wire (34) is placed parallel to the normal conductive wire (36).

10. Magnet coil according to one of claims 1 to 9, characterized in that the superconductive wire (34) is a multi-filament wire (10; 15) with a cross-sectional proportion of a normal conductive carrier (11; 16) of less than 80%.

11. Magnet coil according to claim 10, characterized in that the cross-sectional proportion of the normal conductive carrier (11; 16) is between 50% and 75%.

12. Magnet coil according to one of claims 1 to 11, characterized in that the normal conductive wire (36) is a copper wire in semihard state with a residual resistance ratio of more than 50.

13. Magnet coil according to one of claims 1 to 12, characterized in that the superconductive wire (34) and the normal conductive wire (36) have a rectangular cross-section.

Fig.1

Fig.2

Fig.3

Fig. 4

Fig. 5